# EUROPEAN PATENT SPECIFICATION

(11) **EP 2 689 169 B1**
(45) Date of publication and mention of the grant of the patent: **19.10.2016**
(21) Application number: 12706975.5
(22) Date of filing: 17.02.2012
(51) Int. Cl.: F16K 27/02, F16K 31/126, G05D 16/06, G05D 16/10

(54) **BONNET APPARATUS FOR USE WITH FLUID REGULATORS**
HAUBENVORRICHTUNG ZUR VERWENDUNG MIT FLÜSSIGKEITSREGULATOREN
APPAREIL À CAPOT DESTINÉ À ÊTRE UTILISÉ AVEC DES RÉGULATEURS DE FLUIDE

(30) Priority: 21.03.2011 US 201113052451
(43) Date of publication of application: 29.01.2014
(73) Proprietor: Tescom Corporation, Elk River, MN 55330 (US)
(72) Inventor: CLIFFORD, Jason, D., Brooklyn Park, MN 55443 (US); CRAMER, Mark, Wharton, Zimmerman, MN 55398 (US)
(74) Representative: Foot, Paul Matthew James
(86) International application number: PCT/US2012/025536
(87) International publication number: WO 2012/128869

(56) References cited:
- EP-A1- 0 192 625
- EP-A2- 0 716 230
- WO-A1-98/10208
- WO-A2-2007/110859
- WO-A2-2011/002559
- GB-A- 335 044
- GB-A- 834 574
- US-A- 5 292 024
- US-A1- 2010 147 400

## Description

### FIELD OF THE DISCLOSURE

This patent relates generally to fluid regulators and, more particularly, to bonnet apparatus for use with fluid regulators.

### BACKGROUND

Fluid regulators are commonly distributed throughout process control systems to control the pressures of various fluids (e.g., liquids, gasses, etc.). Fluid regulators are typically used to regulate the pressure of a fluid to a substantially lower or constant value. Specifically, a fluid regulator has an inlet that typically receives a supply fluid at a relatively high pressure and provides a relatively lower and substantially constant pressure at an outlet. A fluid regulator typically includes a body defined by a bonnet coupled to a valve body. Prior examples of fluid regulators are disclosed in International Patent Application WO 2011/002559 A2 (TESCOM CORP. et al) and International Patent Application WO 98/10208 A1 (STANDARD KEIL Inc.). Document US2010/0147400 A1 discloses a bonnet comprising all the features described in the premble of claim 1 of this patent.

Safety ratings of fluid regulators are often based on a maximum inlet pressure at which the fluid regulator can safely operate. For example, safety ratings of many fluid regulators are typically based on safety guidelines provided by the Compressible Gas Association, Inc. To comply with certain safety requirements, a bonnet of the fluid regulator is often composed of a relatively high strength metallic material (e.g., zinc, brass, etc.) that can withstand relatively high pressures and/or large temperature ranges. In particular, a bonnet must often be capable of containing potentially broken internal components that may be produced during a failure condition of the fluid regulator. However, a strength (e.g., a yield strength, an impact toughness) of a metallic material such as, for example, a zinc material or alloy (e.g., ZAMAK) of the bonnet or fluid regulator may be affected when the fluid regulator is used in relatively low temperature applications (e.g., -40° C.). For example, a metallic material may be more brittle in colder temperature applications. As a result, the fluid regulator may not be suitable for use in relatively low temperature applications because the fluid regulator may not comply with certain safety guidelines when used in these applications.

### SUMMARY

In one example, a bonnet apparatus includes a body having a cavity to receive a loading assembly of the fluid regulator. A support structure is disposed in the cavity and extends across the cavity to increase an impact toughness or strength of the body.

In another example, a bonnet apparatus includes a bonnet having a body to define a cavity where the body of the bonnet defines a stepped body portion adjacent an opening of the cavity. A relief is formed in an inner surface of the cavity adjacent the stepped body portion.

In another example, a fluid regulator includes a bonnet having a flange, a boss and a body joining the flange and the boss to define a cavity to receive a loading assembly. The flange is adjacent a first end of the body to couple the bonnet to a valve body of the fluid regulator. The boss is adjacent a second end of the body and has an aperture to receive an adjusting element of the loading assembly. A plurality of support structures is disposed within the cavity adjacent the second end of the body such that the support structures extend outwardly between a hub and an inner surface of the cavity. A relief is formed within the inner surface of the cavity adjacent the first end of the body between the flange and the body.

### BRIEF DESCRIPTION OF THE DRAWINGS

FIG. 1 illustrates a known fluid regulator.
FIG. 2 illustrates an example fluid regulator described herein.
FIG. 3A is a cross-sectional view an example bonnet of the fluid regulator of FIG. 2.
FIG. 3B is a bottom view of the example bonnet of FIG. 3A.
FIG. 3C is a bottom, perspective view of the example bonnet of FIGS. 2, 3A and 3B.
FIG. 4 is another cross-sectional view of the example bonnet of FIGS. 3A and 3B taken along line 4-4 of FIG. 3A.
FIG. 5 illustrates a partial, enlarged view of the example fluid regulator of FIG. 2.

### DETAILED DESCRIPTION

Example bonnet apparatus described herein significantly improve a safety rating of a fluid regulator. Improving a safety rating of a fluid regulator enables use of the fluid regulator in a wider range of operating conditions than, for example, conventional fluid regulators. For example, a fluid regulator described herein may be used with process fluids having temperatures of approximately -40°C when the fluid regulator is pressurized to a maximum inlet pressure rating. In contrast, conventional fluid regulators may be used in applications having process fluids at room temperatures (e.g., 25°C) when the fluid regulator is pressurized to a maximum inlet pressure rating. Additionally or alternatively, the example bonnet apparatus described herein increase a maximum inlet pressure rating of the fluid regulator. Further, example fluid regulators described herein comply with certain safety rating or safety guidelines provided by, for example, the Compressive Gas Association, Inc., when used in relatively low temperature applications (e.g., below 0°C to -40°C).

An example bonnet apparatus described herein improves a strength (e..g, a yield strength, impact strength, tensile strength, etc.) of the fluid regulator to increase a maximum inlet pressure rating of the fluid regulator and/or expand the operating temperature range of the fluid regulator. To improve the strength of the bonnet, an example bonnet described herein includes a support structure. Unlike conventional bonnet apparatus, which may fail due to lack of bonnet strength when subjected to process fluids (or ambient conditions) having temperatures of approximately -40°C, the bonnet apparatus described herein have one or more support structures to provide sufficient or increased strength when used in process applications having relatively low temperatures (e.g., process fluids or ambient conditions at temperatures of -40°C).

More specifically, to increase the strength of the bonnet, the example bonnet apparatus described herein have a support structure or apparatus adjacent a first end of the bonnet. In some examples, the support structure may be disposed in a cavity of the bonnet and comprise webbing having support walls or ribs extending between inner surfaces of the bonnet. For example, the webbing may include one or more support walls or ribs that extend from a central hub or center of the webbing to an inner surface or side wall of the bonnet. In some examples, the webbing extends between opposing inner surfaces of the cavity of the bonnet.

Additionally or alternatively, to increase the strength of the bonnet apparatus, the bonnet apparatus may employ a relief. In particular, the relief may be formed in an inner surface of the cavity and positioned adjacent a second end of the bonnet. In particular, the relief is an annular radiused curved surface that more evenly distributes localized stresses along a highly stressed area of the bonnet adjacent a sensing element interface. Further, in some examples, the radiused curved surface is formed via a casting manufacturing process (e.g., "as-cast") and is not machined. Forming the relief via a casting manufacturing process as opposed to, for example, forming the relief via machining provides a stronger bonnet apparatus because much of the strength in a casting is in the surface or skin of the material and this material is not removed from the bonnet apparatus when forming the relief via casting.

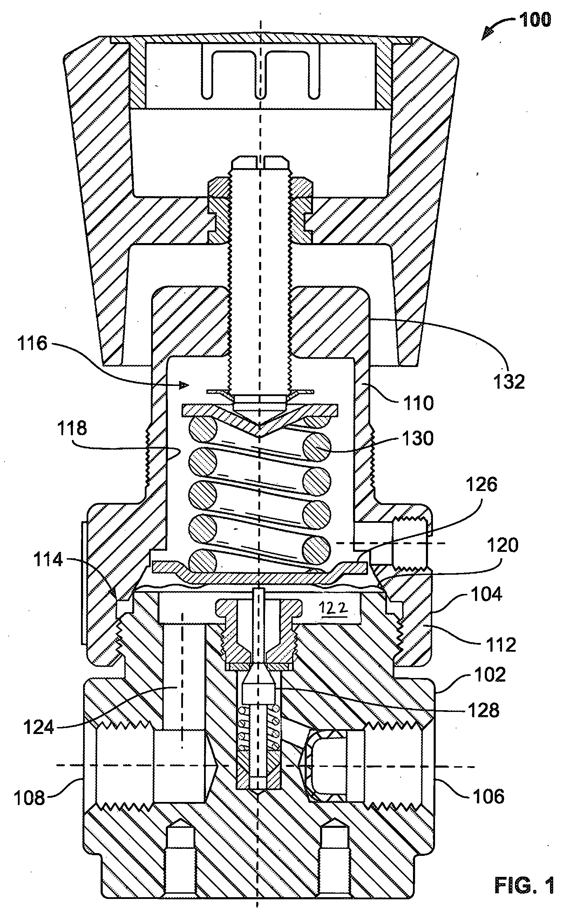

Before discussing an example fluid regulator described herein, a brief description of a known fluid regulator 100 is provided in FIG. 1. Referring to FIG. 1, the example fluid regulator 100 includes a valve body 102 threadably coupled to a bonnet 104 that defines a fluid passageway between an inlet 106 and an outlet 108. The bonnet 104 includes a body 110 having a flange 112 that includes internal threads to threadably couple the bonnet to the valve body 102. The bonnet 104 is coupled to the valve body 102 with a relatively high torque to provide a substantially tight metal-to-metal seal between the bonnet 104 and the valve body 102. Such a connection imparts a high localized stress concentration at an interface 114 between the flange 112 and the body 110.

A load assembly 116 is disposed within a cavity 118 defined by the body 110 of the bonnet 104 and is adjustable to provide a load to a diaphragm 120, where the load corresponds to a desired fluid outlet pressure. The diaphragm 120 is captured between the bonnet 104 and the valve body 102 to partially define a sensing chamber 122 that is in fluid communication with the outlet 108 via a passageway 124. Further, to provide support to the diaphragm 120, the fluid regulator 100 includes a diaphragm plate 126. The diaphragm plate 126 is typically composed of a high strength material such as, for example, stainless steel. A valve apparatus 128 moves between an open position to regulate or throttle the flow of fluid between the inlet 106 and the outlet 108 and a closed position to restrict fluid flow between the inlet 106 and the outlet 108.

In operation, the load assembly 116 is adjusted to provide a load to the diaphragm 120 that corresponds to a desired outlet pressure. A pressure differential across the diaphragm 120 moves between a closed position to restrict fluid flow between the inlet 106 and the outlet 108 and an open position to allow fluid flow between the inlet 106 and the outlet 108. For example, the valve apparatus 128 moves to a closed position when a fluid pressure at the outlet 108 provides a force to the diaphragm 120 that is greater than or equal to a force provided to the diaphragm 120 by a spring 130 of the load assembly 116. The valve apparatus 128 moves to an open position when the fluid pressure at the outlet 108 provides a force to the diaphragm 120 that is less than a force provided to the diaphragm 120 by the load assembly 116. The pressurized fluid flows between the inlet 106 and the outlet 108 until the forces on opposing sides of the diaphragm 120 are balanced.

A failure condition can occur when the pressure at the outlet 108 significantly exceeds a maximum inlet pressure rating of the fluid regulator 100. For example, a failure condition may occur when the pressure at the outlet 108 is significantly greater than the desired pressure setting provided by the load assembly 116 that may be caused by, for example, improper sealing of the valve apparatus 128, downstream equipment failure, installing the regulator backwards (inlet line pressure to outlet port 108), etc. During a failure condition of the fluid regulator 100, the bonnet 104 has sufficient strength or impact toughness to capture or contain potentially broken internal components (e.g., the spring 130) that may be produced. In particular, the bonnet 104 has sufficient strength to prevent ejection of the load assembly 116 (e.g., the spring 130) from an upper surface or end 132 of the bonnet 104. The diaphragm plate 126, which is composed of a hard metallic material, supports the diaphragm 120 and withstands the forces imparted to the diaphragm 120 by the pressure of the fluid at the outlet 108 in a direction toward the upper surface 132 of the bonnet 104.

However, in some process applications having temperatures of approximately - 40°C, the relatively cold temperature of a process fluid or ambient conditions may affect the material properties of the bonnet 104. For example, the material properties of the bonnet 104 may become more brittle causing the bonnet 104 to lose strength or have a relatively less impact toughness when the bonnet 104 is subjected to relatively cold applications or conditions.

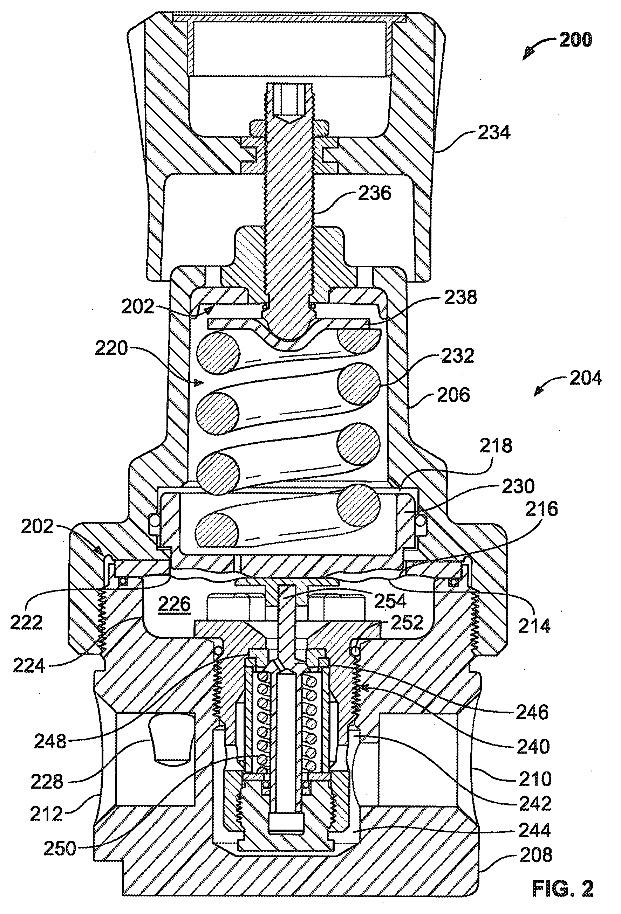

FIG. 2 illustrates an example fluid regulator 200 described herein having reinforcement apparatus 202. The example fluid regulator 200 includes a regulator body 204 having an upper body portion or bonnet 206 coupled (e.g., threadably coupled) to a lower body portion or valve body 208. The valve body 208 forms a fluid flow path between an inlet 210 and an outlet 212 of the fluid regulator 200. A diaphragm 214 is captured between the valve body 208 and the bonnet 206 so that a first side 216 of the diaphragm 214 and the bonnet 206 define a loading chamber 218 to receive a load assembly 220. A second side 222 of the diaphragm 214 and an inner surface 224 of the valve body 208 define a sensing chamber 226. The sensing chamber 226 is fluidly coupled to the outlet 212 via a passage 228 and senses the pressure of the fluid at the outlet 212. In the illustrated example, the diaphragm 214 is a metal diaphragm composed of, for example, stainless steel.

The load assembly 220 is operatively coupled to the diaphragm 214 via a diaphragm plate or back-up plate 230 and provides a reference force or load (e.g., a pre-set force) to the diaphragm 214. The diaphragm plate 230 is composed of a material such as, for example, a plastic material (e.g., a rigid plastic material) that is configured to fracture, buckle, shatter or otherwise break during a failure condition of the fluid regulator 200. In other words, the diaphragm plate 230 is composed of a material that is significantly weaker than the material of the bonnet 206. The diaphragm plate 230 is also robust and will not fail during required outlet pressure proof testing and cycle testing.

In this example, the load assembly 220 includes a biasing element 232 (e.g., a spring) disposed within the loading chamber 218 that provides a load to the diaphragm 214 via the diaphragm plate 230. A spring adjuster 234 adjusts (e.g., increases or decreases) the amount of a preset force or load that the biasing element 232 exerts on the first side 216 of the diaphragm 214. As shown, the spring adjuster 234 includes a control knob keyed to a screw 236 that is threadably coupled to the bonnet 206 and engages an adjustable spring seat or spring button 238. The spring button 238 is composed of a ductile, flexible or pliable material such as, for example, an elastomeric material, a plastic material, a ductile metal, etc. to prevent shattering of the spring button 238 during a failure condition and provide an impact cushion for the biasing element 232 during a failure condition. Rotation of the control knob in a first direction (e.g., a clockwise direction) or a second direction (e.g., a counterclockwise direction) varies the amount of compression of the biasing element 232 (e.g., compresses or decompresses the biasing element 232) and, thus, the amount of load exerted on the first side 216 of the diaphragm 214.

A valve apparatus or valve cartridge assembly 240 is disposed within a bore 242 of the valve body 208 that defines an inlet chamber 244 fluidly coupled to the inlet 210. The valve apparatus 240 includes a poppet 246 that moves toward a valve seat 248 to restrict fluid flow between the inlet 210 and the outlet 212 when the fluid regulator 200 is in the closed position. The poppet 246 moves away from the valve seat 248 to allow fluid flow between the inlet 210 and the outlet 212 when the fluid regulator 200 is in the open position. A biasing element 250 biases the poppet 246 toward the valve seat 248. A seal 252 (e.g., an O-ring) is disposed between the valve apparatus 240 and the valve body 208 of the fluid regulator 200 to provide a seal between the sensing chamber 226 and the inlet chamber 244.

In operation, the example fluid regulator 200 fluidly couples to, for example, an upstream pressure source providing a relatively high pressure fluid (e.g., a gas) via the inlet 210 and fluidly couples to, for example, a low pressure downstream device or system via the outlet 212. The fluid regulator 200 regulates the outlet pressure of the fluid flowing through the fluid regulator 200 to a desired pressure corresponding to the preset load provided by the adjustable load assembly 220. In some applications, the process fluid or ambient conditions may have a temperature of approximately -40°C.

To achieve a desired outlet pressure, the spring adjustor 234 is rotated (e.g., in a clockwise or counterclockwise direction) to increase or decrease the load exerted by the biasing element 232 on the first side 216 of the diaphragm 214. The load provided by the biasing element 232 is adjusted to correspond to a desired outlet pressure. With the reference pressure set, the sensing chamber 226 senses a pressure of the pressurized fluid at the outlet 212 via the passage 228, which causes the diaphragm 214 to move in response to pressure changes in the sensing chamber 226.

As the fluid flows between the inlet 210 and the outlet 212, the pressure of the fluid at the outlet 212 increases. As the pressure of the pressurized fluid in the sensing chamber 226 increases, the pressure of the fluid exerts a force on the second side 222 of the diaphragm 214 to cause the diaphragm 214 and the biasing element 232 to move in a rectilinear motion away from the valve body 208. In turn, the biasing element 250 of the valve apparatus 240 causes the poppet 246 to move toward the valve seat 248 to restrict fluid flow between the inlet 210 and the outlet 212. A pressure of the fluid in the sensing chamber 226 that exerts a force on the second side 222 of the diaphragm 214 that is greater than the reference pressure or force exerted by the load assembly 220 on the first side 216 of the diaphragm 214 causes the diaphragm plate 230 to move away from the valve body 208 to allow the poppet 246 to sealingly engage the valve seat 248 to restrict or prevent fluid flow through the fluid regulator 200 as shown in FIG. 2.

When the pressure of the pressurized fluid in the sensing chamber 226 is less than the reference pressure or force exerted by the biasing element 232 on the first side 216 of the diaphragm 214, the diaphragm 214 moves, bends or flexes toward the valve body 208. In turn, the diaphragm plate 230 engages a stem portion 254 of the poppet 246 to move the poppet 246 away from the valve seat 248 to allow or increase fluid flow between the inlet 210 and the outlet 212. The poppet 246 moves toward the valve seat 248 to prevent or restrict fluid flow between the inlet 210 and the outlet 212 when the pressure differential across the diaphragm 214 is substantially near zero (i.e., the pressure of the fluid in the sensing chamber 226 is regulated to a pressure that generates a force substantially equal to the load provided by the load assembly 220).

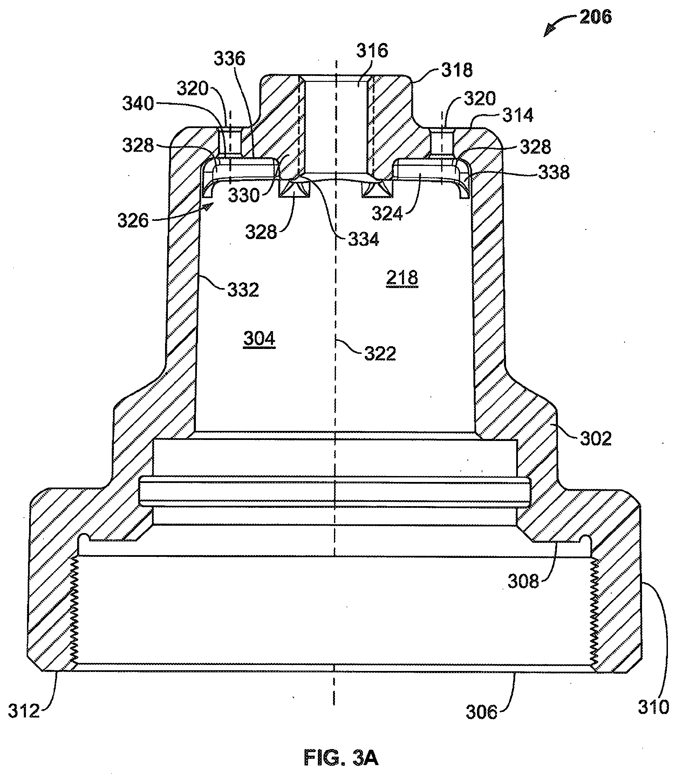

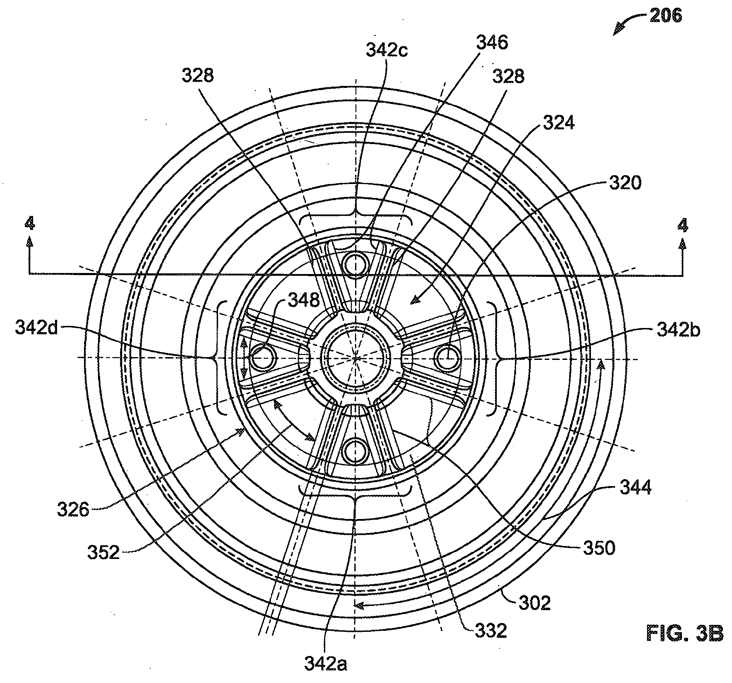

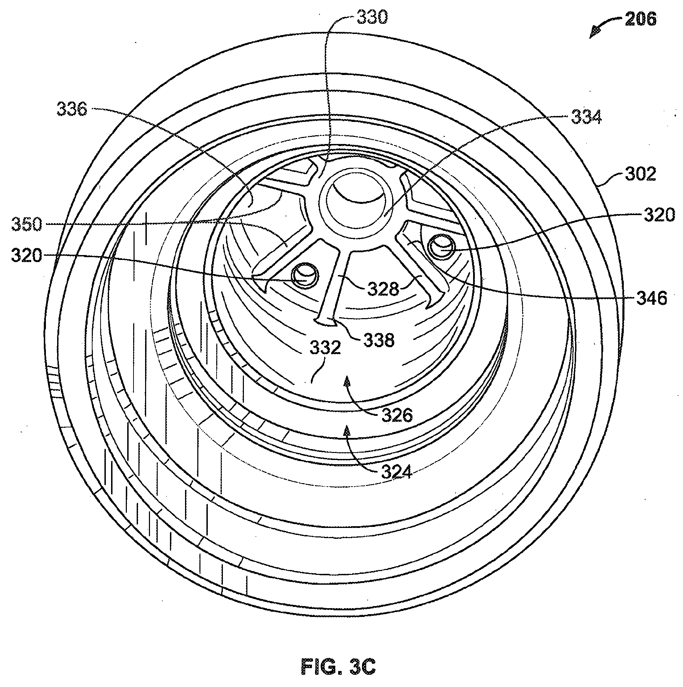

FIG. 3A is a cross-sectional view of the bonnet 206 of FIG. 2, FIG. 3B is a bottom view of the example bonnet 206 of FIG. 3A, and FIG. 3C is a perspective bottom view of the example bonnet 206 of FIG. 3C. Referring to FIGS. 3A-3C, the bonnet 206 of the illustrated example includes a cylindrical body 302 having a cavity 304 that defines the loading chamber 218 to receive the load assembly 220 of FIG. 2. The cavity 304 of the illustrated example has an end 306 that opens toward the sensing chamber 226 (FIG. 2) when the bonnet 206 is coupled to the valve body 208. The body 302 of the illustrated example includes a stepped body portion 308 to define a flange or annular rim 310 adjacent a first end 312 of the body 302. The flange 310 of the illustrated example includes threads (e.g., internal threads) to threadably couple the bonnet 206 to the valve body 208.

A second end 314 of the body 302 is capped or closed and includes an opening 316 to receive the screw 236 of the load assembly 220. In this example, the opening 316 (e.g., a threaded opening) of the bonnet 206 is defined by a boss 318. The boss 318 of the illustrated example protrudes away from the second end 314 of the body 302. The boss 318 of the illustrated example is integrally formed with the body 302 of the bonnet 206. To vent the loading chamber 218 to, for example, the atmosphere, the second end 314 of the body 302 includes one or more vents 320 radially spaced relative to a longitudinal axis 322 of the cavity 304 and adjacent the boss 318.

To increase an impact toughness and/or strength (e.g., yield strength) of the bonnet 206, the bonnet 206 of the illustrated example includes a support structure 324. The support structure 324 of the illustrated example is disposed within the cavity 304 adjacent the second end 314 of the body 302. In particular, the support structure 324 of the illustrated example includes a plurality of support structures 324 extending across the cavity 304 of the body 302. For example, the plurality of support structures 324 may be radially spaced relative to the longitudinal axis 322 of the cavity 304 at any desired angle (e.g., 90 degrees, 45 degrees, 30 degrees, etc.) such that the support structures 324 do not obstruct or block fluidic communication between the cavity 304 and the vents 320.

As most clearly shown in FIGS. 3B and 3C, the support structure 324 of the illustrated example is a web or webbing 326 formed from a plurality of walls or ribs 328. The webbing 326 includes a hub or central portion 330 from which the walls or ribs 328 of the illustrated example extend outwardly toward an inner side surface 332 of the cavity 304. As most clearly shown in FIGS. 3A and 3C, the hub 330 is positioned approximately centrally within the cavity 304 adjacent the second end 314 of the body 302 and includes an opening 334 coaxially aligned with the opening 316 of the boss 318 to partially receive the screw 236 of the load assembly 220. In particular, the hub 330 of the illustrated example is integrally formed with the body 302 of the bonnet 206 and/or the boss 318, and protrudes away from an upper inner surface 336 of the bonnet 206 into the cavity 304.

Further, as most clearly shown in FIG. 3A, each of the walls or ribs 328 of the illustrated example includes a curved end 338 that engages the inner side surface 332 of the cavity 304 or body 302. An upper surface 340 of each of the walls or ribs 328 of the illustrated example engages the upper inner surface 336 of the body 302. However, in other examples, the upper surface 340 of one or more of the walls or ribs 328 may be spaced away from the upper inner surface 336 of the body 302. Referring to FIG. 3A, the walls or ribs 328 have an L-shaped cross-sectional shape or profile. Also, referring to FIG. 3B, the ribs or walls 328 have a substantially straight profile or shape as they extend between the hub 330 and the inner side surface 332. However, in other examples, the ribs or walls 328 may have a substantially curved profile or shape as they extend between the hub 330 and the inner side surface 332.

As most clearly shown in FIG. 3B and 3C, the walls or ribs 328 are radially spaced relative to the longitudinal axis 322 and the vents 320 to allow fluid flow through the vents 320. For example, the walls or ribs 328 form pairs of support structures 342a-d that are symmetrically spaced relative to the longitudinal axis 322 at an angle 344. For example, a first support structure pair 342a is spaced at an angle of approximately 90 degrees relative to a second support structure pair 342b. Each pair of support structures 342a-d surrounds a respective one of the vents 320.

Further, inner surfaces 346 of the respective walls or ribs 328 are spaced relative to each other at an angle 348, and outer surfaces 350 of the walls or ribs 328 are spaced relative to each other at an angle 352. In the illustrated example, the angle 348 between the inner surfaces 346 is approximately 36 degrees and the angle 352 between the outer surfaces 350 is approximately 54 degrees. In other examples, the walls or ribs 328 of the illustrated example may be disproportionately or asymmetrically spaced relative to the longitudinal axis 322. Also, as shown, the webbing 326 of the illustrated example includes eight ribs. However, in other examples, the webbing 326 may include only one wall or rib 328 or any number of walls or ribs 328 to increase the strength or impact toughness of the bonnet 206. For example, the webbing 326 of the illustrated example may include additional ribs disposed between each pair of support structures 342a-342d.

Additionally or alternatively, although not shown, the webbing 326 of the illustrated example may include one or more transverse or interconnecting ribs extending between the outer surfaces 350 and/or the inner surfaces 346 of the respective walls or ribs 328. Such interconnecting ribs may have a relatively straight shape or profile or may have a relatively curved shape or profile. Thus, in some examples, the webbing 326 may have a plurality of ribs or walls extending between the hub 330 and the inner side surface 332 of the body 302 and a plurality of interconnecting ribs extending between surfaces 346 and/or 350 of the ribs or walls 328. In other words, the webbing 326 may form a grid-like support structure.

The support structure 324 (i.e., the webbing 326) of the illustrated example is integrally formed with the bonnet 206 via, for example, casting, machining or any other suitable manufacturing process(es). However, in other examples, the support structure 324 or webbing 326 may be an insert that is coupled (e.g., threadably coupled) to the bonnet 206. For example, the hub 330 may have internal threads and/or outer threads to threadably couple the webbing 326 adjacent the second end 314 of the bonnet 206. In some examples the support structure 324 or webbing 326 may be press-fit (e.g., an interference fit) within the cavity 304 of the bonnet 206.

Further, the support structure 324 is composed of substantially the same material (e.g., zinc) as a material of the body 302 of the bonnet 206. However, in other examples, the support structure 324 may be composed of a different material than the material of the body 302 of the bonnet 206. In yet other examples, a portion of the support structure 324 may be composed of a first material (e.g., stainless steel) and a second portion of the support structure 324 may be composed of a second material. For example, a first support structure portion or first rib may be composed of stainless steel and a second support structure portion or second rib may be composed of zinc or zinc alloy.

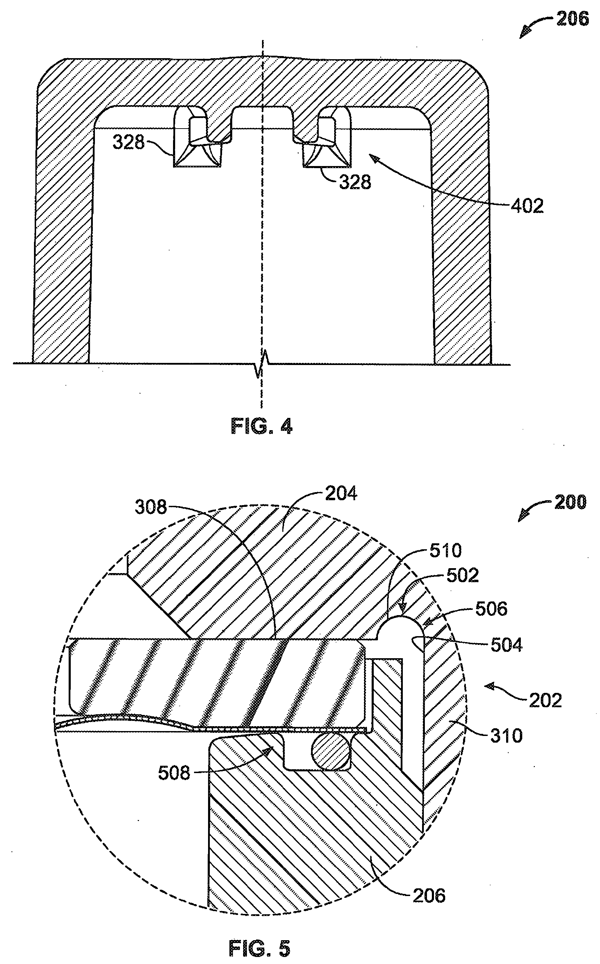

FIG. 4 is a cross-sectional view of the bonnet 206 taken along line 4-4 of the FIG. 3B. As shown, each of the walls or ribs 328 has a rectangular transverse cross-sectional shape or profile 402. In other examples, one or more of the walls or ribs 328 may have a square transverse cross-sectional shape, a tapered transverse cross-sectional shape, a round or circular transverse cross-sectional shape, an I-shaped transverse cross-sectional shape or any other suitable transverse cross-sectional shape or profile that increases strength and/or impact toughness.

FIG. 5 is an enlarged, partial view of the example regulator of FIG. 2. Referring to FIGS. 2 and 5, the bonnet 206 of the illustrated example includes a relief 502 disposed adjacent the first end 312 of the body 302. In particular, the relief 502 is formed in an inner surface 504 of the cavity 304 adjacent the stepped body portion 308 between the body 302 and the flange 310. More specifically, the relief 502 is formed along a relatively highly stressed area 506 of the bonnet 302 adjacent a diaphragm interface 508. Such an area 506 often bears a relatively high stress concentration because a significant amount of torque load is applied to the bonnet 206 to clamp the diaphragm 214 between the bonnet 206 and the valve body 208 to provide a relatively tight metal-to-metal seal. Also, during the CGA safety test where inlet pressure (e.g., 31 MPa (4500 psi)) admitted to the outlet 212 and the sensing chamber 226, the area 506 of the bonnet 302 bears a relatively high stress level. The relief 502 affects or more evenly distributes localized stresses along the relatively highly stressed area 506 of the bonnet 206 adjacent the diaphragm interface 508.

The relief 502 of the illustrated example has an arcuate or curved surface 510. For example, the relief 502 has a semi-circular cross-sectional shape or profile. In the illustrated example, the relief 502 is an annular relief about the inner surface 332 of the body 302 adjacent the stepped body portion 308. However, in other examples, the relief 502 may be formed about a partial circumference of the body 302 and/or may be formed intermittently about the circumference of the body 302.

In the illustrated example, the relief 502 is integrally formed with the bonnet 206 via casting. Thus, the relief 502 of the illustrated example is an "as-cast" radius formed in the skin of the bonnet 206. However, in some examples, the relief 502 may be formed via machining or any other suitable manufacturing process(es).

During a failure condition, the diaphragm plate 230 may shatter or collapse, which may cause the diaphragm 214 to fail. More specifically, the diaphragm plate 230 may shatter at a pressure that is significantly greater than an operating pressure, but less than a pressure at which the bonnet 206 will fail. If the diaphragm plate 230 shatters, the pressurized fluid in the sensing chamber 226 vents to the atmosphere via the cavity 304 and the vents 320. Further, the support structure 324 provides increased strength or impact toughness to capture and prevent ejection of internal components (e.g., the spring 232) that may potentially break during the failure condition. In other words, the support structure 324 or webbing 326 prevents the second end 314 of the body 302 from fracturing or breaking off. Additionally, the spring button 238 is composed of a ductile material to provide a cushion to the internal components (e.g., the spring 232) that may eject toward the second end 314 of the body 302 during a failure condition. Further, the relief 502 distributes any localized stresses to prevent the body 302 from fracturing or breaking off at the area 506. In this manner, the support structure 324 and the relief 502 increase the strength and/or the impact toughness of the bonnet 206 to prevent fracture or failure of the bonnet 206 during an overpressure condition.

The bonnet apparatus 206 enables use of the fluid regulator 200 in relatively low temperature applications (e.g., temperatures at or below -40°C). In particular, the fluid regulator 200 safely vents a rapid increase in pressure within the sensing chamber 226 to the atmosphere during a failure condition while retaining all of the internal components of the fluid regulator 200 within the body 302 of the bonnet 206.

Although certain example methods, apparatus and articles of manufacture have been described herein, the scope of coverage of this patent is not limited thereto. On the contrary, this patent covers all methods, apparatus and articles of manufacture fairly falling within the scope of the appended claims either literally or under the doctrine of equivalents.

## Claims

1. A bonnet (206) for use with a fluid regulator comprising:
a body (302) having a cavity (304) to receive a loading assembly (220) of the fluid regulator;
a support structure (324) disposed in the cavity and extending across the cavity to increase an impact toughness or strength of the body, the support structure comprising a webbing (326), the webbing comprising a hub (330) and a plurality of pairs of walls or ribs (328), the hub protruding away from an upper inner surface (336) of the body into the cavity (304), the plurality of pairs of walls or ribs extending outwardly away from the hub towards an inner side surface (332) of the body;
wherein the hub comprises an opening (334) coaxially aligned with an opening (316) of the body to receive an adjusting element of the load assembly; **characterized in that**
the body (302) includes a plurality of venting apertures (320); and
**in that** each pair of walls or ribs surrounds a respective one of the venting apertures.

2. A bonnet of claim 1, wherein the walls or ribs (328) are radially spaced relative to a longitudinal axis (322) of the cavity (304).

3. A bonnet of any of the preceding claims, wherein the bonnet further comprises a relief (502) disposed adjacent a first end (312) of the body.

4. A bonnet of claim 3, wherein the relief comprises a radiused curve surface (510).

5. A bonnet of claim 3 or 4, wherein the support structure (324) and the relief (502) are integrally formed with the bonnet body via casting.

6. A fluid regulator, comprising:
a bonnet having a flange (310), a boss (318) and a body (302) joining the flange and the boss to define a cavity (304) to receive a loading assembly (220), the flange being adjacent a first end (312) of the body to couple the bonnet to a valve body of the fluid regulator, the boss being adjacent a second end (314) of the body and having an aperture (316) to receive an adjusting element of the loading assembly;
a support structure (324) disposed within the cavity adjacent the second end (314) of the body, the support structure comprising a webbing (326), the webbing comprising a hub (330) and a plurality of pairs of walls or ribs (328), the hub protruding away from an upper inner surface (336) of the body into the cavity, the plurality of pairs of walls or ribs extending outwardly away from the hub towards an inner side surface (332) of the body, the hub comprising an opening (334) coaxially aligned with the aperture (316) to receive the adjusting element;
a relief (502) formed within an inner surface (504) of the body adjacent the first end of the body between the flange and the body;
wherein the body (302) includes a plurality of venting apertures (320); and **characterized in that** each pair of walls or ribs surrounds a respective one of the venting apertures.

7. A fluid regulator of claim 6, wherein the second end of the body includes the plurality of venting apertures (320).

8. A fluid regulator of claim 6 or 7, further comprising a diaphragm support plate (230) that is to buckle or shatter during a failure condition of the fluid regulator to fluidly couple a sensing chamber (226) of the fluid regulator to the venting apertures (320) via the cavity (304).

9. A fluid regulator of claim 7 or 8 when dependent on claim 7, wherein the walls or ribs (328) are radially spaced relative to the longitudinal axis (322) of the cavity (304) and relative to the venting apertures (320).

10. A fluid regulator of any of claims 6 to 9, wherein the walls or ribs (328) are radially spaced and have first ends integrally formed with the hub and second ends integrally formed with an inner side surface (332) of the body.

11. A fluid regulator of any of claims 6 to 10, wherein the relief (502) comprises an annular curved surface (510) integrally formed with the bonnet (206) via casting.

12. A fluid regulator of claim 11, wherein the curved surface (510) comprises a semi-circular cross-sectional shape.

13. A fluid regulator comprising:
a support structure means (324) for increasing an impact toughness or strength of a bonnet (206) of the fluid regulator, said support structure means (324) being adjacent a second end (314) of the bonnet (206), wherein the support structure means for increasing the impact toughness or strength of the bonnet is disposed within a cavity (304) of a body of the bonnet and extends between walls defined by the bonnet, the support structure comprising a webbing (326), the webbing comprises a hub (330) and a plurality of pairs of walls or ribs (328), the hub protruding away from an upper inner surface (336) of the body into the cavity (304), the plurality of pairs of walls or ribs extending outwardly away from the hub towards an inner side surface (332) of the body, the hub comprising an opening (334) coaxially aligned with an opening (316) of the body to receive an adjusting element of the load assembly;
an annular relief means (502) for affecting localized stresses along an area of the bonnet adjacent a first end of the bonnet, wherein the annular relief means for affecting localized stresses is formed in a cavity of the body; and
**characterized in that** each pair of walls or ribs surrounds a respective one of a plurality of venting apertures (320) included in the body.

## Patentansprüche

1. Aufsatz (206) zur Verwendung mit einem Fluidregler, welcher aufweist:
einen Körper (302), welcher einen Hohlraum (304) aufweist, um eine Lastanordnung (220) des Fluidreglers zu empfangen;
eine unterstützende Struktur (324), welche in dem Hohlraum angeordnet ist und welche sich über den Hohlraum erstreckt, um eine Schlagfestigkeit oder eine Stärke des Körpers zu erhöhen, wobei die unterstützende Struktur ein Gewebe (326) aufweist, wobei das Gewebe eine Anlagefläche (330) und eine Anzahl an Paaren von Wänden oder Rippen (328) aufweist, wobei die Anlagefläche sich von einer oberen inneren Oberfläche (336) der Körpers in den Hohlraum (304) erstreckt, wobei die Anzahl der Wände oder der Rippen sich nach außen weg von der Anlagefläche in die Richtung einer inneren seitlichen Oberfläche (332) des Körpers erstreckt;
wobei die Anlagefläche eine Öffnung (334) aufweist, welche koaxial mit einer Öffnung (316) des Körpers angeordnet ist, um ein Einstellelement der Lastanordnung zu empfangen, **dadurch gekennzeichnet, dass**
der Körper (302) eine Anzahl an Belüftungsöffnungen (320) aufweist, und dass
jedes Paar der Wände oder der Rippen eine entsprechende von den Belüftungsöffnungen umgibt.

2. Aufsatz nach Anspruch 1, wobei die Wände oder die Rippen (328) in Bezug auf eine longitudinale Achse (322) des Hohlraums (304) radial beabstandet sind.

3. Aufsatz nach einem beliebigen der vorhergehenden Ansprüche, wobei der Aufsatz ferner eine Aussparung (502) aufweist, welche an ein erstes Ende (312) des Körpers angrenzend angeordnet ist.

4. Aufsatz nach Anspruch 3, wobei die Aussparung eine gerundete gekrümmte Oberfläche (510) aufweist.

5. Aufsatz nach Anspruch 3 oder 4, wobei die unterstützende Struktur (324) und die Aussparung (502) mit dem Körper des Aufsatzes über eine Gießen einstückig ausgebildet sind.

6. Fluidregler, welcher aufweist:
einen Aufsatz, welcher einen Flansch (310), einen Ansatz (318) und einen Körper (301) aufweist, welcher den Flansch und den Ansatz verbindet, um einen Hohlraum (304) zu bestimmen, um die Lastanordnung (220) zu empfangen, wobei der Flansch angrenzend an ein erstes Ende (312) des Körpers angeordnet ist, um den Aufsatz an den Ventilkörper des Fluidreglers zu koppeln,
wobei der Ansatz angrenzend an ein zweites Ende (314) des Körpers angeordnet ist und eine Öffnung (316) aufweist, um ein Einstellelement der Lastanordnung zu empfangen,
eine unterstützende Struktur (324), welche in dem Hohlraum angrenzend an ein zweites Ende (14) des Körpers angeordnet ist, wobei die unterstützende Struktur ein Gewebe (326) und eine Anzahl an Paaren von Wänden oder Rippen (328) aufweist, wobei die Anlagefläche sich von einer oberen inneren Oberfläche (336) der Körpers erstreckt, wobei die Anzahl der Wände oder der Rippen sich nach außen weg von der Anlagefläche in die Richtung einer inneren seitlichen Oberfläche (332) des Körpers erstreckt, wobei die Anlagefläche eine Öffnung (334) aufweist, welche koaxial mit der Öffnung (316) angeordnet ist um das Einstellelement zu empfangen;
eine Aussparung (502), welche innerhalb einer inneren Oberfläche (504) des Körpers angrenzend an das erste Ende der Körpers zwischen dem Flansch und dem Körper ausgebildet ist;
wobei der Körper (302) eine Anzahl an Belüftungsöffnungen (320) aufweist, und
**dadurch gekennzeichnet, dass** jedes Paar der Wände oder der Rippen eine entsprechende von den Belüftungsöffnungen umgibt.

7. Fluidregler nach Anspruch 6, wobei das zweite Ende des Körpers die Anzahl an Belüftungsöffnungen (320) enthält.

8. Fluidregler nach Anspruch 6 oder 7, welcher ferner eine eine Membran unterstützende Platte (230) aufweist, welche während eines Fehlerzustandes des Fluidreglers nachgibt und zerspringt, um im Fluid eine Sensorkammer (226) des Fluidreglers mit den Belüftungsöffnungen (320) des Hohlraums (304) zu koppeln.

9. Fluidregler nach Anspruch 7 oder 8 bei Abhängigkeit von Anspruch 7, wobei die Wände oder die Rippen (323) radial in Bezug auf eine longitudinale Achse (322) des Hohlraums (304) und in Bezug auf die Belüftungsöffnungen (320) beabstandet sind.

10. Fluidregler nach einem beliebigen der Ansprüche 6 bis 9, wobei die Wände oder die Rippen (323) radial beabstandet sind und erste Enden, welche einstückig mit der Anlagefläche ausgebildet sind, und zweite Enden aufweisen, welche einstückig mit einer inneren seitlichen Oberfläche (332) des Körpers ausgebildet sind.

11. Fluidregler nach einem beliebigen der Ansprüche 6 bis 10, wobei die Aussparung (502) eine ringförmige gekrümmte Oberfläche (510) aufweist, welche einstückig mit dem Aufsatz (206) über ein Gießen ausgebildet ist.

12. Fluidregler nach Anspruch 11, wobei die gekrümmte Oberfläche (510) eine halbkreisförmige Gestalt im Querschnitt aufweist.

13. Fluidregler, welcher aufweist:
eine unterstützende Struktur (324), um eine Schlagfestigkeit oder eine Stärke eines Aufsatzes (206) des Fluidreglers zu erhöhen, wobei die unterstützende Struktur (324) an ein zweites Ende (314) des Aufsatzes (206) angrenzend angeordnet ist, wobei das Mittel der unterstützenden Struktur, um die Schlagfestigkeit oder die Stärke des Aufsatzes zu erhöhen, innerhalb eines Hohlraums (304) des Körpers des Aufsatzes angeordnet ist und sich zwischen den Wänden erstreckt, welche durch den Aufsatz bestimmt sind, wobei die unterstützende Struktur ein Gewebe (326) aufweist, wobei das Gewebe eine Anlagefläche (330) und eine Anzahl an Paaren von Wänden oder Rippen (328) aufweist, wobei die Anlagefläche sich von einer oberen inneren Oberfläche (336) des Körpers weg in den Hohlraum (304) erstreckt, wobei die Anzahl der Wände oder der Rippen sich nach außen weg von der Anlagefläche in die Richtung einer inneren seitlichen Oberfläche (332) des Körpers erstreckt, wobei die Anlagefläche eine Öffnung (334) aufweist, welche koaxial mit einer Öffnung (316) des Körpers ausgerichtet ist, um ein Einstellelement der Lastanordnung zu empfangen;
ein ringförmiges Aussparungsmittel (502), um eine lokalisierte Beanspruchung entlang eines Bereiches des Aufsatzes zu bewirken, welcher an ein erstes Ende des Aufsatzes angrenzend ist, wobei das ringförmige Aussparungsmittel zur Bewirkung einer lokalisierten Beanspruchung in einem Hohlraum des Körpers gebildet ist, und
**dadurch gekennzeichnet, dass** jedes Paar der Wände oder der Rippen eine entsprechende von der Anzahl der Belüftungsöffnungen (302) umgibt, welche in dem Körper enthalten sind.

## Revendications

1. Chapeau (206) à usage avec un régulateur de fluide comprenant :
un corps (302) ayant une cavité (304) pour recevoir un ensemble de chargement (220) du régulateur de fluide ;
une structure de support (324) disposée dans la cavité et s'étendant à travers la cavité pour augmenter une ténacité au choc ou une résistance du corps, la structure de support comprenant une armature (306), l'armature comprenant un moyeu (330) et une pluralité de paires de parois ou nervures (328), le moyeu faisant saillie d'une surface intérieure supérieure (336) du corps dans la cavité (304), la pluralité de paires de parois ou nervures s'étendant vers l'extérieur en s'éloignant du moyeu vers une surface latérale intérieure (332) du corps ;
dans lequel le moyeu comprend une ouverture (334) coaxialement alignée avec une ouverture (316) du corps pour recevoir un élément de réglage de l'ensemble de chargement,
**caractérisé en ce que** le corps (302) inclut une pluralité d'ouvertures d'évent (320) ; et
**en ce que** chaque paire de parois ou nervures entoure une ouverture respective parmi les ouvertures d'évent.

2. Chapeau selon la revendication 1, dans lequel les parois ou nervures (328) sont radialement espacées par rapport à un axe longitudinal (322) de la cavité (304).

3. Chapeau selon l'une quelconque des revendications précédentes, dans lequel le chapeau comprend en outre un évidement (502) disposé au voisinage d'une première extrémité (312) du corps.

4. Chapeau selon la revendication 3, dans lequel l'évidement comprend une surface courbe arrondie (510).

5. Chapeau selon la revendication 3 ou 4, dans lequel la structure de support (304) et l'évidement (502) sont formés d'un seul tenant avec le corps de chapeau par coulée.

6. Régulateur de fluide, comprenant :
un chapeau ayant un rebord (310), une saillie (318) et un corps (302) réunissant le rebord et la saillie pour définir une cavité (304) pour recevoir un ensemble de chargement (220), le rebord étant au voisinage d'une première extrémité (312) du corps pour coupler le chapeau à un corps de vanne du régulateur de fluide, la saillie étant au voisinage d'une seconde extrémité (314) du corps et ayant une ouverture (316) pour recevoir un élément de réglage de l'ensemble de chargement ;
une structure de support (324) disposée à l'intérieur de la cavité au voisinage de la seconde extrémité (314) du corps, la structure de support comprenant une armature (326), l'armature comprenant un moyeu (330) et une pluralité de paires de parois ou nervures (328), le moyeu faisant saillie d'une surface intérieure supérieure (336) du corps dans la cavité, la pluralité de paires de parois ou nervures s'étendant vers l'extérieur en s'éloignant du moyeu vers une surface latérale intérieure (332) du corps, le moyeu comprenant une ouverture (334) coaxialement alignée avec l'ouverture (316) pour recevoir l'élément de réglage ;
un évidement (502) formé à l'intérieur d'une surface intérieure (504) du corps au voisinage de la première extrémité du corps entre le rebord et le corps ;
dans lequel le corps (302) inclut une pluralité d'ouvertures d'évent (320) ; et
**caractérisé en ce que** chaque paire de parois ou nervures entoure une ouverture respective parmi les ouvertures d'évent.

7. Régulateur de fluide selon la revendication 6, dans lequel la seconde extrémité du corps inclut la pluralité d'ouvertures d'évent (320).

8. Régulateur de fluide selon la revendication 6 ou 7, comprenant en outre une plaque support de membrane (230) qui est destinée à flamber ou se briser pendant un état de rupture du régulateur de fluide pour coupler fluidiquement une chambre de détection (226) du régulateur de fluide aux ouvertures d'évent (320) via la cavité (304).

9. Régulateur de fluide selon la revendication 7 ou 8 lorsque dépendante de la revendication 7, dans lequel les parois ou nervures (328) sont radialement espacées par rapport à l'axe longitudinal (322) de la cavité (304) et par rapport aux ouvertures d'évent (320).

10. Régulateur de fluide selon l'une quelconque des revendications 6 à 9, dans lequel les parois ou nervures (328) sont radialement espacées et ont de premières extrémités formées d'un seul tenant avec le moyeu et de secondes extrémités formées d'un seul tenant avec une surface latérale intérieure (332) du corps.

11. Régulateur de fluide selon l'une quelconque des revendications 6 à 10, dans lequel l'évidement (502) comprend une surface courbe annulaire (510) formée d'un seul tenant avec le chapeau (206) par coulée.

12. Régulateur de fluide selon la revendication 11, dans lequel la surface courbe (510) comprend une forme semi-circulaire en section transversale.

13. Régulateur de fluide comprenant :
des moyens de structure de support (324) pour augmenter une ténacité au choc ou une résistance d'un chapeau (206) du régulateur de fluide, lesdits moyens de structure de support (324) étant au voisinage d'une seconde extrémité (314) du chapeau (206), dans lequel les moyens de structure de support pour augmenter la ténacité au choc ou la résistance du chapeau sont disposés à l'intérieur d'une cavité (304) d'un corps du chapeau et s'étendent entre des parois définies par le chapeau, la structure de support comprenant une armature (326), l'armature comprenant un moyeu (330) et une pluralité de paires de parois ou nervures (328), le moyeu faisant saillie d'une surface intérieure supérieure (336) du corps dans la cavité (304), la pluralité de paires de parois ou nervures s'étendant vers l'extérieur en s'éloignant du moyeu vers une surface latérale intérieure (332) du corps, le moyeu comprenant une ouverture (334) coaxialement alignée avec une ouverture (316) du corps pour recevoir un élément de réglage de l'ensemble de chargement ;
des moyens d'évidement annulaire (502) pour affecter des contraintes localisées le long d'une zone du chapeau au voisinage d'une première extrémité du chapeau, dans lequel les moyens d'évidement annulaire pour affecter des contraintes localisées sont formés dans une cavité du corps ; et
**caractérisé en ce que** chaque paire de parois ou nervures entoure une ouverture respective parmi une pluralité d'ouvertures d'évent (320) incluses dans le corps.
